# EUROPÄISCHE PATENTSCHRIFT

(11) **EP 0 387 482 B1**
(45) Veröffentlichungstag und Bekanntmachung des Hinweises auf die Patenterteilung: **28.04.1993**
(21) Anmeldenummer: 90100285.7
(22) Anmeldetag: 08.01.1990
(51) Int. Cl.: B01D 3/14, B01D 1/10

(54) **Abtriebskolonne zur Trennung von Einsatzprodukten mit hoher Siedepunktsdifferenz**
Rectification column for separating feeds with a higher boiling point difference
Colonne de rectification pour la séparation des charges ayant une différence de point d'ébullition plus haute

(30) Priorität: 16.02.1989 DE 3904711
(43) Veröffentlichungstag der Anmeldung: 19.09.1990
(73) Patentinhaber: Krupp Koppers GmbH, 45143 Essen (DE)
(72) Erfinder: Skatulla, Luzian, D-4330 Mülheim/Ruhr (DE); Vollmer, Hans-Jürgen, Dr., D-4300 Essen 1 (DE)

(56) Entgegenhaltungen:
- DE-A- 2 320 320
- FR-A- 501 808
- GB-A- 467 617
- GB-A- 787 688
- US-A- 2 944 966
- US-A- 2 988 060
- US-A- 3 678 661
- US-A- 4 174 273

## Beschreibung

Die Erfindung betrifft eine zur Trennung von Einsatzprodukten mit hoher Siedepunktsdifferenz geeignete Abtriebskolonne mit einem Umlaufkocher, der über eine Zulaufleitung und eine Ablaufleitung mit dem Kolonnensumpf verbunden und mit einem vom Sumpfprodukt der Abtriebskolonne durchflossenen, senkrechten Rohrbündel ausgerüstet ist, wobei die Ablaufleitung unterhalb des Abzugsbodens für das zu erhitzende Sumpfprodukt in die Abtriebskolonne mündet.

Abtriebskolonnen, bei denen die Erhitzung des destillativ in seine Bestandteile zu trennenden Einsatzproduktes dadurch erfolgt, daß das Sumpfprodukt oder ein Teil davon aus der Abtriebskolonne abgezogen, im Umlaufkocher im indirekten Wärmeaustausch mit einem Heizmedium erhitzt bzw. verdampft und danach wieder in die Abtriebskolonne eingeleitet wird, sind allgemein bekannt. Hierbei ist der Umlaufkocher normalerweise mit einem senkrecht oder waagerecht angeordneten Rohrbündel versehen, das vom Sumpfprodukt durchflossen und von außen durch das Heizmedium beheizt wird. Ein Ausführungsbeispiel für eine derartige Kolonne ist beispielsweise in "Ullmanns Encyklopädie der technischen Chemie", 4. Auflage, Band 2, Seite 506, Abbildung 34, dargestellt. Sofern jedoch Einsatzprodukte mit hoher Siedepunktsdifferenz, das heißt Einsatzprodukte, bei denen die Siedepunkte der höchstsiedenden Bestandteile und der niedrigstsiedenden Bestandteile weit voneinander entfernt sind, in derartigen Abtriebskolonnen aufgearbeitet werden sollen, ergeben sich Probleme. In diesen Fällen findet nämlich im Rohrbündel des Umlaufkochers auf einem großen Teil der Rohrlänge nur eine konvektive Wärmeübertragung statt. Eine Verdampfung ist dagegen in diesem Bereich nicht möglich, da hier der Dampfdruck der leichtsiedenden Bestandteile des Einsatzproduktes unter dem Gesamtdruck der Flüssigkeitssäule liegt. Da außerdem in vielen Fällen aus betrieblichen Gründen nur ein einmaliger Durchlauf des aus der Abtriebskolonne abgezogenen Sumpfproduktes durch den Umlaufkocher stattfindet, werden im Bereich der konvektiven Wärmeübertragung nur mäßige, in manchen Fällen sogar sehr niedrige Wärmeübergangszahlen erreicht. Zwar kann man dieses Problem durch eine Vergrößerung der Wärmeaustauschflächen in den Griff bekommen. Dies führt jedoch zu einer Vergrößerung des gesamten Umlaufkochers, der natürlich dementsprechend teurer wird. Zudem stehen in vielen Fällen auch betriebliche Gegebenheiten einer derartigen Vergrößerung entgegen.

Der Erfindung liegt deshalb die Aufgabe zugrunde, eine Abtriebskolonne mit am Kolonnensumpf angeordnetem Umlaufkocher zu schaffen, die insbesondere zur Trennung von Einsatzprodukten mit hoher Siedepunktsdifferenz geeignet ist und bei der sich der Umlaufkocher durch eine möglichst kompakte Bauweise und hohe Leistungsfähigkeit auszeichnet.

Diese Aufgabe wird gelöst durch eine Abtriebskolonne der eingangs genannten Art, die erfindungsgemäß dadurch gekennzeichnet ist, daß im Umlaufkocher der Raum oberhalb des oberen Rohrbodens durch eine Trennwand in zwei Kammern getrennt ist, wobei die eine Kammer den Anschluß für die Zulaufleitung und die andere Kammer den Anschluß für die Ablaufleitung für das zu erhitzende Sumpfprodukt der Antriebskolonne aufweist und wobei der Umlaufkocher so am Kolonnensumpf angeordnet ist, daß zwischen dem Flüssigkeitsspiegel auf dem Abzugsboden der Abtriebskolonne und dem oberen Rohrboden des Umlaufkochers eine Höhendifferenz (a) besteht, deren Größe so gewählt ist, daß der Gesamtdruck der Flüssigkeitssäule in dem unterhalb der Kammer 10 befindlichen Teil des Rohrbündels an jeder Stelle über dem Dampfdruck des zu erhitzenden Sumpfproduktes liegt.

Weitere Einzelheiten und Ausführungsformen der erfindungsgemäßen Abtriebskolonne ergeben sich aus den vorliegenden Unteransprüchen und sollen nachfolgend an Hand der Abbildungen erläutert werden. Hierbei zeigen in vereinfachter Darstellung:
- Fig. 1: einen Schnitt durch den Unterteil der erfindungsgemäßen Abtriebskolonne mit dem dazugehörigen Umlaufkocher
und
- Fig. 2: einen Schnitt durch eine andere Ausführungsform des Umlaufkochers.

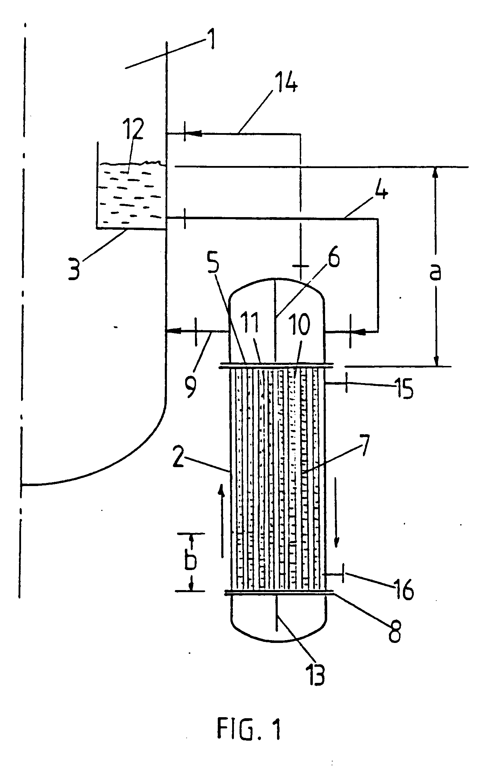

Die Fig. 1 zeigt einen Schnitt durch die Abtriebskolonne 1 mit dem dazugehörigen Umlaufkocher 2. Da es bei dieser Darstellung nur auf die Anordnung des Umlaufkochers 2 an der Abtriebskolonne 1 sowie dessen Ausgestaltung ankommt, wurde von der Abtriebskolonne 1 nur die Hälfte des Kolonnenunterteils wiedergegeben, an der der Umlaufkocher 2 angeschlossen ist. Grundsätzlich kann diese Kolonne eine zum Stand der Technik gehörende Ausführungsform aufweisen. Das heißt, sie kann mit den für diese Kolonnen üblichen Einbauten und Nebeneinrichtungen, wie z.B. Meß- und Regeleinrichtungen, versehen sein. Ebenso können natürlich statt des einen Umlaufkochers 2 auch deren mehrere an Abtriebskolonne 1 in der gleichen Art und Weise angeordnet sein.

Beim Betrieb der Abtriebskolonne 1 wird das Sumpfprodukt über den Abzugsboden 3 abgezogen und über die Zulaufleitung 4 in den Umlaufkocher 2 eingeleitet. In diesem ist erfindungsgemäß der Raum oberhalb des oberen Rohrbodens 5 durch eine Trennwand 6 in zwei Kammern 10 und 11 geteilt. Da diese Trennwand 6 flüssigkeitsundurchlässig ist, kann das über die Zulaufleitung 4 zufließende Sumpfprodukt nur über die Kammer 10 in die Rohre der rechten Hälfte des Rohrbündels 7 abfließen. Das heißt, durch die Anordnung der Trennwand 6 wird der Rohrweg innerhalb des Rohrbündels 7 in zwei Abschnitte aufgeteilt. Im Bereich des ersten (rechten) Abschnittes fließt dabei das Sumpfprodukt von oben nach unten durch das Rohrbündel 7 und tritt über den unteren Rohrboden 8 aus.

Hierbei findet die Wärmeübertragung zwischen dem Sumpfprodukt und dem Heizmedium, das das Rohrbündel 7 von außen umströmt, ausschließlich durch Konvektion statt. Anschließend gelangt das Sumpfprodukt von unten in die linke Hälfte des Rohrbündels 7, die von unten nach oben durchflossen wird, worauf das erhitzte Sumpfprodukt über den oberen Rohrboden 5 austritt. In diesem Abschnitt des Rohrweges findet eine Verdampfung statt, weshalb das Sumpfprodukt zumindest teilverdampft über die Kammer 11 und die Ablaufleitung 9 in den Sumpf der Abtriebskolonne 1 zurückgeführt wird. Die Pfeile in der Abbildung markieren die Strömungsrichtung in den beiden Abschnitten des Rohrweges.

Damit im ersten (rechten) Abschnitt des Rohrweges eine Verdampfung verhindert wird, ist erfindungsgemäß vorgesehen, den Umlaufkocher 2 so an der Abtriebskolonne 1 anzuordnen, daß zwischen dem Flüssigkeitsspiegel 12 auf dem Abzugsboden 3 und dem oberen Rohrboden 5 eine Höhendifferenz a besteht, deren Größe so gewählt wird, daß der Gesamtdruck der Flüssigkeitssäule an jeder Stelle des ersten Abschnittes des Rohrweges über dem Dampfdruck des zu erhitzenden Sumpfproduktes liegt. Selbstverständlich ist die Höhendifferenz a dabei vom Dampfdruck des jeweils zu erhitzenden Sumpfproduktes abhängig, wobei die Höhendifferenz a umso größer sein muß, je höher der Dampfdruck unter den vorgegebenen Temperaturbedingungen im Umlaufkocher 2 ist. In der Praxis wird man jedoch in den allermeisten Anwendungsfällen davon ausgehen können, daß die Höhendifferenz a mindestens 1 m betragen soll.

Damit im ersten Abschnitt des Rohrweges eine Verdampfung mit Sicherheit vermieden wird, ist es außerdem angebracht, daß im zweiten Abschnitt die Höhe b der dort befindlichen Flüssigkeitssäule einen bestimmten Minimalwert nicht unterschreitet, wobei der Verdampfungsteil erst oberhalb dieser Flüssigkeitssäule beginnt. In der Praxis sollte der Wert für b nicht unter 1 m liegen. Zur Einstellung der gewünschten Verhältnisse kann ggf. im Raum unterhalb des unteren Rohrbodens 8 ein Stauwehr 13 oder eine andere Einrichtung zum Stauen der Flüssigkeit angeordnet sein.

Die Leitung 14 dient der Entlüftung des Raumes oberhalb des oberen Rohrbodens 5 und die Anschlußstutzen 15 und 16 sind für die Leitungen zur Zu- und Abfuhr des Heizmediums vorgesehen, wobei die Strömungsrichtung des Heizmediums entsprechend den jeweiligen Gegebenheiten beliebig gewählt werden kann. Das heißt, das Heizmedium kann sowohl über den Stutzen 15 in den Umlaufkocher 2 eintreten und über den Stutzen 16 austreten als auch über den Stutzen 16 eintreten und über den Stutzen 15 austreten.

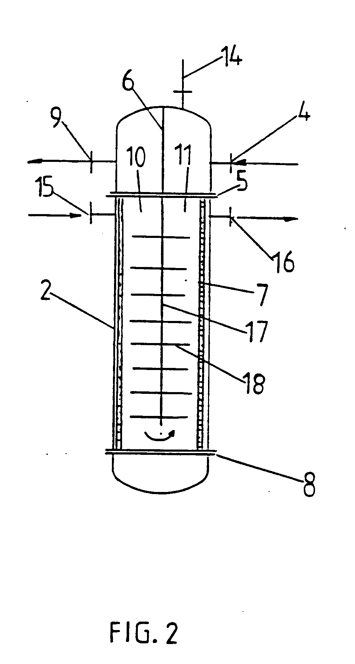

Fig. 2 zeigt eine Ausführungsform, bei der im Umlaufkocher 2 nicht nur der Raum oberhalb des oberen Rohrbodens 5 durch die Trennwand 6 aufgeteilt ist, sondern wo auch unterhalb des oberen Rohrbodens 5 eine Längswand 17 angeordnet ist. Die Anordnung des Umlaufkochers 2 an der Abtriebskolonne 1 entspricht dabei der Darstellung in Fig. 1, weshalb die Abtriebskolonne 1 hier nicht mehr eingezeichnet wurde. Selbstverständlich haben hier gleiche Bezugszeichen auch die gleiche Bedeutung wie in Fig. 1. Die Längswand 17 beginnt unmittelbar unter dem oberen Rohrboden 5 und endet dabei oberhalb des unteren Rohrbodens 8, so daß zwischen diesem und dem unteren Ende der Längswand 17 noch ein ausreichender Zwischenraum besteht. Außerdem kann bei dieser Ausführungsform die Längswand 17 im Bereich des Rohrbündels 7 mit mehreren übereinander angeordneten, waagerechten Leitblechen 18 versehen sein, die sich jedoch nicht über den gesamten Durchmesser des Rohrbündels 7 erstrecken. Im Gegensatz zur Ausführungsform in Fig. 1 sind hier die Anschlußstutzen 15 und 16 für das Heizmedium nicht untereinander, sondern gegenüberliegend angeordnet. Dadurch wird der Strömungsweg des Heizmediums innerhalb des Umlaufkochers 2 verlängert, was natürlich zu einer Verbesserung des Wärmeaustausches führt. So kann das Heizmedium beispielsweise über den Anschlußstutzen 15 in den Umlaufkocher 2 eintreten und dann in der linken Hälte desselben von oben nach unten fließen, wobei die waagerechten Leitbleche 18 umströmt werden. Im Zwischenraum zwischen dem unteren Ende der Längswand 17 und dem unteren Rohrboden 8 wird die Strömung dann umgelenkt, was durch den Pfeil in der Abbildung angedeutet wird. Danach fließt das Heizmedium in der rechten Hälfte des Umlaufkochers 2 von unten nach oben und wird über den Anschlußstutzen 16 abgezogen. Selbstverständlich kann der Strömungsweg des Heizmediums aber auch in umgekehrter Richtung gewählt werden, wobei das Heizmedium über den Anschlußstutzen 16 eintritt und über den Anschlußstutzen 15 austritt. Dabei bleibt der Strömungsweg des zu erhitzenden Sumpfproduktes in jedem Fall so, wie er weiter oben im Zusammenhang mit Fig. 1 beschrieben worden ist. Zur Vereinfachung der Darstellung und damit die Anordnung der Längswand 17 sowie der dazu gehörigen waagerechten Leitbleche 18 besser erkennbar sind, wurden in Fig. 2 nur die äußeren Rohre des Rohrbündels 7 eingezeichnet. Selbstverständlich ist aber in der Praxis das Rohrbündel 7 in Fig. 2 genauso mit Rohren ausgefüllt, wie dies in Fig. 1 dargestellt ist.

Der Einsatz der erfindungsgemäßen Abtriebskolonnen ist in der Praxis insbesondere dann angebracht, wenn folgende Bedingungen vorliegen:
- Mindestens ein Drittel der im Umlaufkocher vorhandenen Wärmeaustauschfläche ist für den konvektiven Wärmeaustausch bis zum Erreichen des Sättigungspunktes des zu erhitzenden bzw. zu verdampfenden Sumpfproduktes erforderlich. Dies ist insbesondere bei Einsatzprodukten mit hoher Siedepunktsdifferenz der Fall. Ein praktisches Beispiel hierfür ist die Aufarbeitung des Extraktes aus vorgeschalteten Extraktionsprozessen zur Gewinnung von reinen Kohlenwasserstoffen aus entsprechenden Einsatzprodukten. Hierbei müssen in der Abtriebskolonne die zu gewinnenden Kohlenwasserstoffe, z.B. Aromaten, aus dem hochsiedenden Lösungsmittel abgetrieben werden.
- Betriebliche Gegebenheiten machen eine Beschränkung der Länge des Umlaufkochers erforderlich. Bisher hat man zwar versucht, in derartigen Fällen die erforderliche Wärmeaustauschfläche durch eine Vergrößerung des Kocherdurchmessers und der Anzahl der Wärmeaustauschrohre bereitszustellen. Dies führt jedoch zu schlechteren Wärmeübergangszahlen.
- Aus betrieblichen Gründen ist nur ein einmaliger Durchlauf des zu erhitzenden Sumpfproduktes durch den Umlaufkocher vorgesehen.

Bei Anwendung der erfindungsgemäßen Abtriebskolonnen gelingt es, die gleiche Leistung mit einer gegenüber bekannten Konstruktionen um bis 30 % verringerten Wärmeaustauschfläche zu erzielen.

## Patentansprüche

1. Zur Trennung von Einsatzprodukten mit hoher Siedepunktsdifferenz geeignete Abtriebskolonne (1) mit einem Umlaufkocher (2), der über eine Zulaufleitung (4) und eine Ablaufleitung (9) mit dem Kolonnensumpf verbunden und mit einem vom Sumpfprodukt der Abtriebskolonne (1) durchflossenen, senkrechten Rohrbündel (7) ausgerüstet ist, wobei die Ablaufleitung (9) unterhalb des Abzugsbodens (3) für das zu erhitzende Sumpfprodukt in die Abtriebskolonne (1) mündet, dadurch gekennzeichnet, daß im Umlaufkocher (2) der Raum oberhalb des oberen Rohrbodens (5) durch eine Trennwand (6) in zwei Kammern (10, 11) getrennt ist, wobei die eine Kammer (10) den Anschluß für die Zulaufleitung (4) und die andere Kammer (11) den Anschluß für die Ablaufleitung (9) für das zu erhitzende Sumpfprodukt der Abtriebskolonne (1) aufweist und wobei der Umlaufkocher (2) so am Kolonnensumpf angeordnet ist, daß zwischen dem Flüssigkeitsspiegel (12) auf dem Abzugsboden (3) der Abtriebskolonne (1) und dem oberen Rohrboden (5) des Umlaufkochers (2) eine Höhendifferenz (a) besteht, deren Größe so gewählt ist, daß der Gesamtdruck der Flüssigkeitssäule in dem unterhalb der Kammer (10) befindlichen Teil des Rohrbündels (7) an jeder Stelle über dem Dampfdruck des zu erhitzenden Sumpfproduktes liegt.

2. Abtriebskolonne nach Anspruch 1, dadurch gekennzeichnet, daß im Raum unterhalb des unteren Rohrbodens (8) ein Stauwehr (13) angeordnet ist.

3. Abtriebskolonne nach den Ansprüchen 1 und 2, dadurch gekennzeichnet, daß unterhalb des oberen Rohrbodens (5) eine Längswand (17) angeordnet ist, die oberhalb des unteren Rohrbodens (8) endet.

4. Abtriebskolonne nach den Ansprüchen 1 bis 3, dadurch gekennzeichnet, daß die Längswand (17) im Bereich des Rohrbündels (7) mehrere übereinander angeordnete, waagerechte Leitbleche (18) aufweist.

## Claims

1. Stripping column (1) suitable for separating feeds with a large boiling point difference, having a reboiler (2) which is connected to the column bottom via an inlet line (4) and an outlet line (9) and is fitted with a vertical tube bundle (7) through which the bottom product of the stripping column (1) flows, the outlet line (9) leading into the stripping column (1) below the take-off tray (3) for the bottom product which is to be heated, characterised in that the space above the upper tube plate (5) in the reboiler (2) is divided by a partition (6) into two chambers (10, 11), one chamber (10) having the connection for the inlet line (4) and the other chamber (11) having the connection for the outlet line (9) for the bottom product, which is to be heated, of the stripping column (1), and the reboiler (2) being arranged on the column bottom in such a way that, between the liquid level (12) on the take-off tray (3) of the stripping column (1) and the upper tube plate (5) of the reboiler (2), there is a height difference (a) of a magnitude selected such that the total pressure of the liquid column in the part of the tube bundle (7), located below the chamber (10), is at any point above the vapour pressure of the bottom product which is to be heated.

2. Stripping column according to Claim 1, characterised in that a holding weir (13) is arranged in the space below the lower tube plate (8).

3. Stripping column according to Claims 1 and 2, characterised in that, below the upper tube plate (5), a longitudinal wall (17) is arranged which ends above the lower tube plate (8).

4. Stripping column according to Claims 1 to 3, characterised in that the longitudinal wall (17) has a plurality of horizontal baffles (18), arranged one above the other, in the region of the tube bundle (7).

## Revendications

1. Colonne de rectification (1) appropriée pour fractionner des produits présentant un écart de points d'ébullition, équipée d'un bouilleur de recirculation (2) qui est relié au fond de la colonne par une conduite d'arrivée (4) et une conduite de départ (9), et qui est équipé d'un faisceau tubulaire vertical (7) parcouru par le produit de fond de la colonne de rectification (1), la conduite de départ (9) débouchant dans la colonne de rectification (1) au-dessous du plateau de soutirage (3) du produit de fond à réchauffer,
caractérisée en ce que, dans le bouilleur de recirculation (2), l'espace qui surmonte la plaque tubulaire supérieure (7) est divisé en deux chambres (10, 11) par une cloison (6), une chambre (10) présentant le raccord qui reçoit la conduite d'arrivée (4) et l'autre chambre (11) présentant le raccord qui reçoit la conduite de départ (9) du produit de fond de la colonne de rectification (1) qu'il s'agit de réchauffer, et le bouilleur de recirculation (2) étant raccordé au fond de la colonne de telle manière qu'il existe entre la surface libre (12) du liquide situé sur le plateau de soutirage (3) de la colonne de rectification (1) et la plaque tubulaire supérieure (5) du bouilleur de recirculation (2), une différence de hauteur (a) dont la valeur est choisie de manière que la pression totale de la colonne de liquide dans la partie du faisceau tubulaire (7) qui est située au-dessous de la chambre (10) soit partout supérieure à la pression de vapeur du produit de fond à réchauffer.

2. Colonne de rectification selon la revendication 1,
caractérisée en ce qu'une chicane de retenue (13) est agencée dans l'espace situé au-dessous de la plaque tubulaire inférieure (8).

3. Colonne de rectification selon les revendications 1 et 2,
caractérisée en ce que sous la plaque tubulaire supérieure (5), est agencée une cloison longitudinale (17) qui se termine au-dessus de la plaque tubulaire inférieure (8).

4. Colonne de rectification selon les revendications 1 à 3,
caractérisée en ce que la cloison longitudinale (17) porte dans la région du faisceau tubulaire (7) plusieurs chicanes horizontales (18) disposées les unes au-dessus des autres.
